(19) Europäisches Patentamt
European Patent Office
Office européen des brevets

(11) **EP 4 629 667 A1**

(12) **EUROPEAN PATENT APPLICATION**
published in accordance with Art. 153(4) EPC

(43) Date of publication:
08.10.2025 Bulletin 2025/41

(21) Application number: 22969718.0

(22) Date of filing: 29.12.2022

(51) International Patent Classification (IPC):
*H04W 4/02* (2018.01)

(52) Cooperative Patent Classification (CPC):
H04W 4/02

(86) International application number:
PCT/CN2022/143626

(87) International publication number:
WO 2024/138571 (04.07.2024 Gazette 2024/27)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicants:
• TP-Link International Chengdu Co., Ltd.
Chengdu, Sichuan 610213 (CN)
• TP-Link Corporation Limited
Kowlon Hong Kong (HK)

(72) Inventors:
• LIN, Xiana
Chengdu, Sichuan 610213 (CN)
• SHI, Minran
Chengdu, Sichuan 610213 (CN)
• HE, Bin
Chengdu, Sichuan 610213 (CN)

(74) Representative: Grassi, Stefano
Bugnion S.p.A.
Viale Lancetti, 17
20158 Milano (IT)

(54) **CLIENT POSITION DETERMINATION METHOD AND APPARATUS, AND PROCESSOR**

(57) Provided in the present disclosure are a method and apparatus for determining a position of a client, and a processor. **The** method includes: a first acquisition step: acquiring at least one piece of first Channel State Information (CSI) from a first communication link for an Access Point (AP) to communicate with the client; a second acquisition step: when a receiving antenna of the AP meets a preset condition, acquiring at least one piece of second CSI from a second communication link for the AP to communicate with the client; a processing step: processing the first CSI to obtain a first phase difference, and processing the second CSI to obtain a second phase difference; and a determination step: determining a position of the client according to the first phase difference and the second phase difference. By respectively acquiring two different groups of CSI, the limitation that a spacing of the AP antenna is limited to half a signal wavelength is lifted.

Fig. 1

A first acquisition step: at least one piece of first CSI is acquired from a first communication link for an AP to communicate with a client — S101

A second acquisition step: when a first receiving antenna and a second receiving antenna of the above AP meet a preset condition, at least one piece of second CSI is acquired from a second communication link for the above AP to communicate with the above client, where the preset condition is that a spacing between the first receiving antenna and the second receiving antenna of the AP is less than half of a signal wavelength, or after the transmitting antenna and/or the receiving antenna is moved, the spacing between the receiving antennas of the AP is less than half of the signal wavelength — S102

A processing step: the first CSI is processed to obtain a first phase difference, and the second CSI is processed to obtain a second phase difference, where the first phase difference is a phase difference of a direct path from the client to the first receiving antenna, and the second phase difference is a phase difference of a direct path from the client to the second receiving antenna — S103

A determination step: a position of the client is determined according to the first phase difference and the second phase difference — S104

EP 4 629 667 A1

## Description

## Technical Field

This present disclosure relates to the technical field of wireless positioning, and specifically to a method and apparatus for determining a position of a client, a computer-readable storage medium and a processor.

## Background

With the rapid development of a wireless communication technology, a client positioning technology also develops continuously. In the related art, a wireless client may be positioned by means of acquiring Channel State Information (CSI). In the field of wireless communication, the so-called CSI may represent a channel attribute of a communication link. The CSI describes a weakening factor on each transmission path, that is, a value of each element in a channel gain matrix, for example, information such as signal scattering, environment decline, distance attenuation, etc. The CSI may cause a communication system to adapt the current channel condition, and thus may ensure the high reliability and high-rate communication of an antenna system.

For an existing client positioning method, it may be effective only when an antenna spacing of an Access Point (AP) is less than half of a signal wavelength. When the AP antenna spacing does not meet the condition, a position of a client calculated has a plurality of solutions, and it is impossible to determine which solution is the true solution.

The above information disclosed in Background is only intended to enhance the understanding of the background of the technology described herein, such that the Background may include certain information that does not form the related art known in this disclosure to those skilled in the art.

## Summary

The present disclosure is mainly intended to provide a method and apparatus for determining a position of a client, and a computer-readable storage medium and a processor, so as to solve the problem of distance condition limitation of an AP in the related art.

An aspect of an embodiment of the present disclosure provides a method for determining a position of a client, including: a first acquisition step: at least one piece of first Channel State Information (CSI) is acquired from a first communication link for an Access Point (AP) to communicate with the client; a second acquisition step: when a first receiving antenna and a second receiving antenna of the AP meet a preset condition, at least one piece of second CSI is acquired from a second communication link for the AP to communicate with the client, where the preset condition is that a spacing between the first receiving antenna and the second receiving antenna of the AP is less than half of a signal wavelength, or after moving at least one receiving antenna, the spacing between the first receiving antenna and the second receiving antenna of the AP is less than half of the signal wavelength; a processing step: the first CSI is processed to obtain a first phase difference, and the second CSI is processed to obtain a second phase difference, where the first phase difference is a phase difference of a direct path from the client to the first receiving antenna, and the second phase difference is a phase difference of a direct path from the client to the second receiving antenna; and a determination step: a position of the client is determined according to the first phase difference and the second phase difference.

As at least one alternative embodiment, processing the first CSI to obtain the first phase difference includes: the first CSI is preprocessed by using a preprocessing method to obtain a first matrix; the first matrix is processed by using a signal classification algorithm to obtain a plurality of pieces of first path information, where the first path information is path information of the first communication link; and the plurality of pieces of first path information are clustered by using a clustering algorithm, so as to obtain the first phase difference.

As at least one alternative embodiment, preprocessing the first CSI by using the preprocessing method to obtain the first matrix includes: the first CSI is processed by using a method for eliminating a sampling error, so as to obtain first processing information; and a matrix constituted by the first processing information is processed, so as to obtain the first matrix, where a rank of the first matrix is greater than the number of paths of the first communication link.

As at least one alternative embodiment, processing the second CSI to obtain the second phase difference includes: the second CSI is preprocessed by using a preprocessing method to obtain a second matrix; the second matrix is processed by using a signal classification algorithm to obtain a plurality of pieces of second path information, where the second path information is path information of the second communication link; and the plurality of pieces of second path information are clustered by using a clustering algorithm, so as to obtain the second phase difference.

As at least one alternative embodiment, preprocessing the second CSI by using the preprocessing method to obtain the second matrix includes: the second CSI is processed by using a method for eliminating a sampling error, so as to obtain second processing information; and a matrix constituted by the second processing information is processed, so as to obtain the second matrix, where a rank of the second matrix is greater than the number of paths of the second communication link.

As at least one alternative embodiment, determining the position of the client according to the first phase difference and the second phase difference includes: a first arrival angle is determined according to a

formula $\delta_1 - \delta_2 = -2\pi \times \Delta d \times \sin(\psi) \times \dfrac{f}{c}$ ,

where the first arrival angle is an arrival angle of a direct path from the client to the AP, $\delta_1$ is the first phase difference, $\delta_2$ is the second phase difference, $\Delta d$ is the spacing between the first receiving antenna and the second receiving antenna, $\psi$ is the first arrival angle, f is a signal frequency, and c is a light speed; a second arrival angle is acquired, where the second arrival angle is an arrival angle of the direct path from the client to the AP, and is located in a plane different from a plane at which the first arrival angle locates; and the position of the client is determined according to an intersection line of a first plane and a second plane, where the first plane is a plane that is formed by the first arrival angle and a receiving antenna of the first arrival angle, and the second plane is a plane that is formed by the first arrival angle and a receiving antenna of the second arrival angle.

As at least one alternative embodiment, acquiring the second arrival angle includes: the second arrival angle is acquired by sequentially using the first acquisition step, the second acquisition step, and the processing step, where in the first acquisition step or the second acquisition step, receiving antennas of the AP are a third receiving antenna and a fourth receiving antenna, a straight line at which the third receiving antenna and the fourth receiving antenna are located is non-collinear with a straight line at which the first receiving antenna and the second receiving antenna are located.

Another aspect of an embodiment of the present disclosure provides an apparatus for determining a position of a client, including: a first acquisition unit, configured to perform a first acquisition step: at least one piece of first CSI is acquired from a first communication link for an AP to communicate with the client; a second acquisition unit, configured to perform a second acquisition step: when a first receiving antenna and a second receiving antenna of the AP meet a preset condition, at least one piece of second CSI is acquired from a second communication link for the AP to communicate with the client, where the preset condition is that a spacing between the first receiving antenna and the second receiving antenna of the AP is less than half of a signal wavelength, or after moving at least one receiving antenna, the spacing between the first receiving antenna and the second receiving antenna of the AP is less than half of the signal wavelength; a processing unit, configured to perform a processing step: the first CSI is processed to obtain a first phase difference, and the second CSI is processed to obtain a second phase difference, where the first phase difference is a phase difference of a direct path from the client to the first receiving antenna, and the second phase difference is a phase difference of a direct path from the client to the second receiving antenna; and a determination unit, configured to perform a determination step: a position of the client is determined according to the first phase difference and the second phase difference.

ference.

Another aspect of an embodiment of the present disclosure further provides a computer-readable storage medium. The computer-readable storage medium includes a stored program. The program executes any one of the above methods.

Yet another aspect of the embodiment of the present disclosure further provides a processor. The processor is configured to operate a program. Any one of the methods is executed when the program is operated.

In the embodiments of the present disclosure, the method for determining the position of the client includes the first acquisition step, the second acquisition step, the processing step, and the determination step. The first acquisition step may acquire the CSI of an antenna combination in which the antenna spacing is not less than half of the signal wavelength, or may also acquire the CSI of an antenna combination in which the antenna spacing is less than half of the signal wavelength. The second acquisition step may acquire the CSI of the antenna combination in which the antenna spacing is less than half of the signal wavelength. The processing step and the determination step process the two groups of the CSI obtained by a method which is distinguished from traditional mathematical modeling method, so as to determine the position information of the client. Therefore, the technical effect of extending an original method for estimating an arrival angle of a direct path from a client to an AP from a linear antenna array meeting the spacing condition to any non-linear antenna array not meeting the isolation condition is achieved, thereby solving the technical problem of limiting the AP antenna spacing as half of the signal wavelength.

## Brief Description of the Drawings

The drawings described herein are used to provide a further understanding of the present disclosure, and constitute a part of the present disclosure. The exemplary embodiments and descriptions of the present disclosure are used to explain the present disclosure and do not constitute an improper limitation of the present disclosure. In the drawings:

Fig. 1 is a flowchart of a method for determining a position of a client according to an embodiment of the present disclosure.

Fig. 2 is a schematic diagram of arrival angles of a plurality of groups of antennas according to an embodiment of the present disclosure.

Fig. 3 is a schematic diagram of a method for determining a position of a client according to an embodiment of the present disclosure.

Fig. 4 is an overall flowchart of a method for determining a position of a client according to an embodiment of the present disclosure.

Fig. 5 is a schematic diagram of an apparatus for determining a position of a client according to an embodiment of the present disclosure.

## Detailed Description of the Embodiments

It is to be noted that the embodiments in the present disclosure and the features in the embodiments may be combined with one another without conflict. The present disclosure will be described below in detail with reference to the drawings and the embodiments.

In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

It is to be noted that terms "first", "second" and the like in the description, claims and the above mentioned drawings of the present disclosure are used for distinguishing similar objects rather than describing a specified sequence or a precedence order. It should be understood that the data used in such a way may be exchanged where appropriate, in order that the embodiments of the present disclosure described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

As described in Background, an antenna spacing of an AP in the related art may be effective by meeting a requirement of being less than half of a signal wavelength. In order to solve the above problem, a typical implementation of the present disclosure provides a method and apparatus for determining a position of a client, and a computer-readable storage medium and a processor.

An embodiment of the present disclosure provides a method for determining a position of a client.

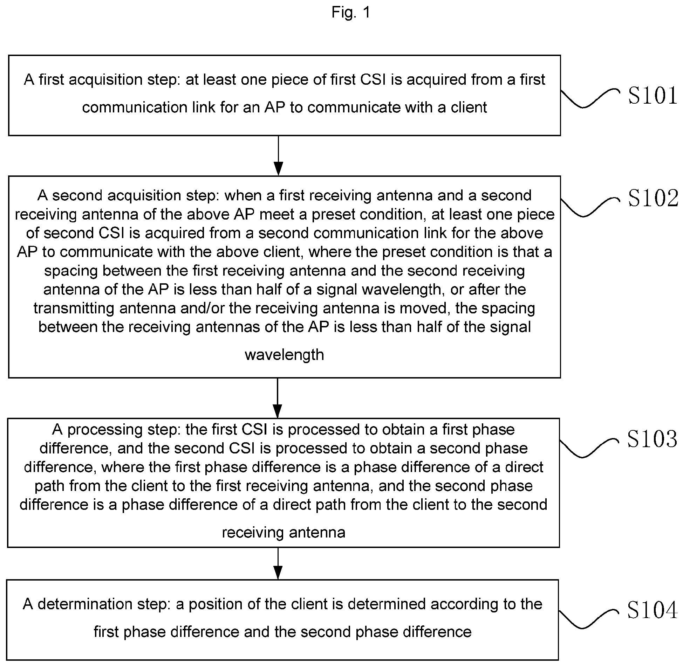

Fig. 1 is a flowchart of a method for determining a position of a client according to an embodiment of the present disclosure. As shown in Fig. 1, the method includes the following steps.

At S101, namely, a first acquisition step: at least one piece of first CSI is acquired from a first communication link for an AP to communicate with a client.

In the above step, the CSI may represent a channel attribute of a communication link. The CSI describes a weakening factor on each transmission path, that is, a value of each element in a channel gain matrix, for example, information such as signal scattering, environment decline, distance attenuation, etc. The CSI may cause a communication system to adapt the current channel condition, and thus may ensure the high reliability and high-rate communication of an antenna system. The acquisition of the above CSI follows related provisions of Protocol 802.11, such that the acquisition of the CSI may be applied to a single user scenario or may also be applied to a multi-user scenario, and different CSI matrices may be obtained by executing the acquisition flow for a plurality of times. The number of rows of the CSI matrix is the number of antennas, the number of columns of the CSI matrix is the number of sub-carriers, and the CSI matrix indicates channel environment information of each antenna on each sub-carrier. A channel attribute of the first communication link may be rapidly acquired in the above step.

At S102, namely, a second acquisition step: when a first receiving antenna and a second receiving antenna of the above AP meet a preset condition, at least one piece of second CSI is acquired from a second communication link for the above AP to communicate with the above client, where the above preset condition is that a spacing between the above first receiving antenna and the above second receiving antenna of the above AP is less than half of a signal wavelength, or after the above transmitting antenna and/or the above receiving antenna is moved, the spacing between the above receiving antennas of the above AP is less than half of the signal wavelength.

In the above step, in an array antenna, in order to prevent a grating lobe, that is, prevent a radiation beam similar to a main beam, the antenna spacing needs to be limited as half of a wavelength. However, in practical application, the antenna spacings of most of the APs cannot meet the requirement. When the second CSI is acquired, there may be two modes. The first mode is to acquire CSI of an antenna pair that originally meets the preset condition; and the second mode may be that, by means of moving an antenna, the antenna that does not meet the preset condition originally meets a distance requirement. A channel attribute of the first communication link may be rapidly acquired in the above step.

At S103, namely, a processing step: the above first CSI is processed to obtain a first phase difference, and the above second CSI is processed to obtain a second phase difference, where the above first phase difference is a phase difference of a direct path from the above client to the first receiving antenna, and the above second phase difference is a phase difference of a direct path from the above client to the above second receiving antenna.

In the above step, error influence during sampling may be eliminated by respectively processing the first CSI and the second CSI, then the plurality of pieces of path information from the client to the AP are separated, then direct path information from the client to the AP is determined, and finally, the phase difference of the direct path information may be determined. Since in practical application, there are a plurality of paths from the client to the AP, including a reflection path and the direct path, an arrival angle and the phase difference may be determined by determining the direct path information. Therefore, the phase difference of the direct path may be rapidly determined in the above step.

At S104, namely, a determination step: a position of the above client is determined according to the above first phase difference and the above second phase difference.

In the above step, since in methods in the related art, when an antenna spacing of a wireless client does not meet the condition, there are a plurality of solutions for the calculated client position, and it is impossible to determine which solution is the true solution, such that the phase differences of the direct paths identified by two groups of antennas may be calculated by using a mathematical modeling method different from the related art, and then the position of the client may be obtained. A distance limitation to the antenna spacing of the AP may be lifted in the above step.

In the embodiments of the present disclosure, the method for determining the position of the client includes the first acquisition step, the second acquisition step, the processing step, and the determination step. The first acquisition step may acquire the CSI of an antenna combination in which the antenna spacing is not less than half of the signal wavelength, or may also acquire the CSI of an antenna combination in which the antenna spacing is less than half of the signal wavelength. The second acquisition step may acquire the CSI of the antenna combination in which the antenna spacing is less than half of the signal wavelength. The processing step and the determination step process the two groups of the CSI obtained by a method which is distinguished from traditional mathematical modeling method, so as to determine the position information of the client. Therefore, the technical effect of extending an original method for estimating an arrival angle of a direct path from a client to an AP from a linear antenna array meeting the spacing condition to any non-linear antenna array not meeting the isolation condition is achieved, thereby solving the technical problem of limiting the AP antenna spacing as half of the signal wavelength.

It is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

On the basis of including the above S101 to S104, the above S103 is refined. The step includes: at S1031, the first CSI is preprocessed by using a preprocessing method to obtain a first matrix. In the above step, the error influence and the effect of phase jumps during sampling may be eliminated by preprocessing the first CSI. At S1032, the first matrix is processed by using a signal classification algorithm to obtain a plurality of pieces of first path information, where the first path information is path information of the first communication link. In the above step, the signal classification algorithm in the above step may include a Multiple Signal Classification (MUSIC) algorithm. The MUSIC algorithm, which was proposed by Schmidt et al. in 1979, is a method based on decomposition of matrix eigenspace. Geometrically, an observation space for signal processing may be decomposed into two orthogonal signal subspaces and a noise subspace. The signal subspace is composed of feature vectors corresponding to signals in a data covariance matrix received by an antenna array; and the noise subspace is composed of feature vectors corresponding to all minimum feature values (noise variance) in the covariance matrix. The MUSIC algorithm constructs a spatial spectral function by using orthogonality of the signal subspace and the noise subspace, and estimates parameters for the signals through spectral peak search. The path information of the plurality of first communication links may be accurately separated through the MUSIC. At S1033, the plurality of pieces of first path information are clustered by using a clustering algorithm, so as to obtain the first phase difference. In the above step, the clustering algorithm may be a clustering algorithm such as moving average clustering, hierarchical clustering, mean shift clustering, gaussian mixture model clustering, etc. The direct path information may be further accurately clustered and identified through the above clustering algorithm, thereby determining the first phase difference.

On the basis of including the above S1031 to S1033, the above S1031 is refined. The step includes: at S10311, the first CSI is processed by using a method for eliminating a sampling error, so as to obtain first processing information. The above method for eliminating a sampling error includes a phase unwrapping technology, Sampling Time Offset (STO) elimination, Sampling Frequency Offset (SFO) elimination, etc. Phase unwrapping is the technology that recovers, from a measured wrapping phase ($-\pi$ to $\pi$ or 0 to $2\pi$), an absolute phase (i.e., elimination of $2\pi$ ambiguity) that can directly reflect a physical property of interest. Phase unwrapping may use a Goldstein branch-cut algorithm, a path tracking algorithm for quality guidance, an unweighted least squares method, a weighted multigrid method, an LP minimum norm method, and a minimum cost flow method. Sampling clock offset arises from the fact that clocks at a sending end and a receiving end are not synchronized, resulting in an inconsistency between sampling clocks of a digital-to-analog converter in the sending end and an analog-to-digital converter in the receiving end. The presence of the STO adds a time offset to a flight time of each propagation path, that is, a phase offset generated by the STO is additionally added to an original phase offset between sub-carriers in addition to a phase offset generated by the flight time, such that the flight time estimated by the algorithm includes the STO. Since the clocks of the sending end and the receiving end are not synchronized, a sampling frequency offset is also caused, causing noise to be added on the phase offset generated by the STO between the sub-carriers, leading to errors in the flight time of the same propagation path among a plurality times of estimations. The STO elimination and SFO elimination methods may use various fitting methods, for example, joint solution is performed on data of a plurality of pieces of CSI by using a linear fitting method, a least squares method, a multiple regression method, etc., and the sampling error may be further eliminated in the above step. At S10312, a matrix constituted by the first processing information is processed, so as to obtain the first matrix, where the rank of the first matrix is greater than the number of paths of the first communication link. In the above step, the matrix constituted by the above first processing information is reconstructed, such that a new matrix having a size different from the size of an original matrix may be formed. The reconstruction of the CSI matrix is mainly intended to reconstruct a matrix of which rank is greater than the number of multipaths from the limited number of the sub-carriers in the CSI. The specific matrix reconstruction mode may use a reconstruction mode such as forward space sliding, backward space sliding, conjugate sliding, etc. With respect to a sliding step length, the number of antennas, and the number of sub-array sub-carriers, those skilled in the art may make their own choices. The above reconstruction on the CSI matrix may meet a requirement of further clustering.

On the basis of including the above S101 to S104, the above S103 is refined. The step includes: at S1034, the second CSI is preprocessed by using a preprocessing method to obtain a second matrix. In the above step, the error influence and the effect of phase jumps during sampling may be eliminated by preprocessing the second CSI. At S1035, the second matrix is processed by using a signal classification algorithm to obtain a plurality of pieces of second path information, where the second path information is path information of the second communication link. In the above step, the signal classification algorithm in the above step may use an MUSIC algorithm. The MUSIC algorithm, which was proposed by Schmidt et al. in 1979, is a method based on decomposition of matrix eigenspace. Geometrically, an observation space for signal processing may be decomposed into two orthogonal signal subspaces and a noise subspace. The signal subspace is composed of feature vectors corresponding to signals in a data covariance matrix received by an array; and the noise subspace is composed of feature vectors corresponding to all minimum feature values (noise variance) in the covariance matrix. The MUSIC algorithm constructs a spatial spectral function by using orthogonality of the signal subspace and the noise subspace, and estimates parameters for the signals through spectral peak search. The path information of the plurality of second communication links may be accurately separated through the MUSIC. At S1036, the plurality of pieces of second path information are clustered by using a clustering algorithm, so as to obtain the second phase difference. In the above step, the clustering algorithm may be a clustering algorithm such as moving average clustering, hierarchical clustering, mean shift clustering, gaussian mixture model clustering, etc. The direct path information may be further accurately clustered and identified through the above clustering algorithm, thereby determining the second phase difference.

On the basis of including the above S1034 to S1036, the above S1034 is refined. The step includes: at S10341, the second CSI is processed by using a method for eliminating a sampling error, so as to obtain second processing information. The above method for eliminating a sampling error includes a phase unwrapping technology, STO elimination, SFO elimination, etc. Phase unwrapping is the technology that recovers, from a measured wrapping phase ($-\pi$ to $\pi$ or 0 to $2\pi$), an absolute phase (i.e., elimination of $2\pi$ ambiguity) that can directly reflect a physical property of interest. Phase unwrapping may use a Goldstein branch-cut algorithm, a path tracking algorithm for quality guidance, an unweighted least squares method, a weighted multigrid method, an LP minimum norm method, and a minimum cost flow method. Sampling clock offset arises from the fact that clocks at a sending end and a receiving end are not synchronized, resulting in an inconsistency between sampling clocks of a digital-to-analog converter in the sending end and an analog-to-digital converter in the receiving end. The presence of the STO adds a time offset to a flight time of each propagation path, that is, a phase offset generated by the STO is additionally added to an original phase offset between sub-carriers in addition to a phase offset generated by the flight time, such that the flight time estimated by the algorithm includes the STO. Since the clocks of the sending end and the receiving end are not synchronized, a sampling frequency offset is also caused, causing noise to be added on the phase offset generated by the STO between the sub-carriers, leading to errors in the flight time of the same propagation path among a plurality of estimations. The STO elimination and SFO elimination methods may use various fitting methods, for example, joint solution is performed on data of a plurality of pieces of CSI by using a linear fitting method, a least squares method, a multiple regression method, etc., and the sampling error may be further eliminated in the above step. At S10342, a matrix constituted by the second processing information is processed, so as to obtain the second matrix, where the rank of the second matrix is greater than the number of paths of the second communication link. In the above step, the matrix constituted by the above second processing information is reconstructed, such that a new matrix having a size different from an original matrix may be formed. The reconstruction of the CSI matrix is mainly intended to reconstruct a matrix of which rank is greater than the number of multipaths from the limited number of the sub-carriers in the CSI. The specific matrix reconstruction mode may use a reconstruction mode such as forward space sliding, backward space sliding, conjugate sliding, etc. With respect to a sliding step length, the number of antennas, and the number of sub-array sub-carriers, those skilled in the art may make their own choices. The above reconstruction on the CSI matrix may meet a requirement of further clustering.

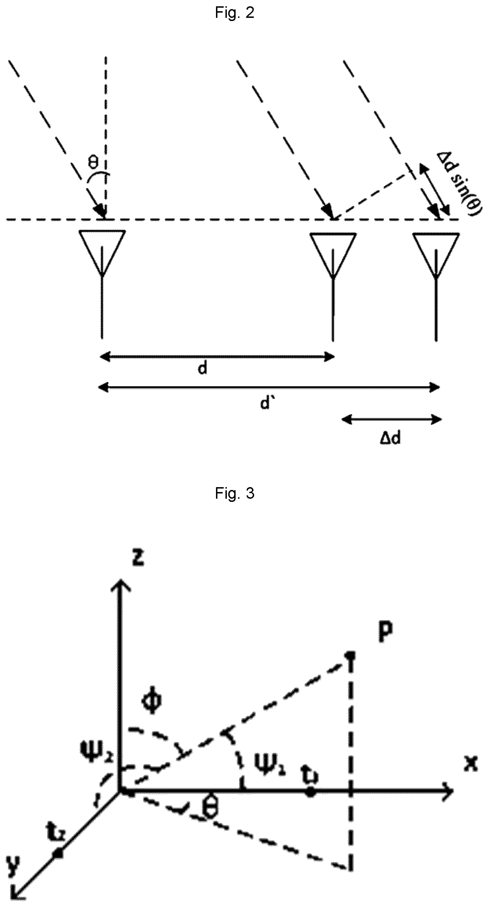

On the basis of including the above S101 to S104, the above S104 is refined. The step includes: at S1041, a first arrival angle is determined according to a

formula $\delta_1 - \delta_2 = -2\pi \times \Delta d \times \sin\theta \times \dfrac{f}{c}$,

where the first arrival angle is an arrival angle of a direct path from the client to the AP. As shown in Fig. 2, $\delta_1$ is the first phase difference, $\delta_2$ is the second phase difference, $\Delta$d is a distance between the first receiving antenna and the second receiving antenna, $\theta$ is the first arrival angle, f is a signal frequency, c is a light speed, d is a distance between the first receiving antenna and the second receiving antenna, and **d'** is a distance between a third receiving antenna and a fourth receiving antenna.

In the above step, the arrival angle of the direct path from the client to the AP may be rapidly determined according to the formula. The arrival angle is an arrival angle on a 2D plane. At S1042, a second arrival angle is acquired, where the second arrival angle is an arrival angle of the direct path from the client to the AP, and is located in a plane different from a plane at which the first arrival angle locates. In the above step, the position of the client may be rapidly determined by means of only adding an antenna or moving the antenna. The second arrival angle may be acquired in a manner in the related art, or may also be acquired by using a manner same as the first arrival angle. At S1043, the position of the above client is determined according to an intersection line of a first plane and a second plane, where the above first plane is a plane that is formed by the above first arrival angle and a receiving antenna of the above first arrival angle, and the above second plane is a plane that is formed by the above first arrival angle and a receiving antenna of the above second arrival angle. As shown in Fig. 3, in an o-xyz three-dimensional coordinate system, t1 and t2 respectively represent position vectors of different antennas. $\phi$ represents an included angle between P and a z-axis, and $\theta$ represents an included angle between a projection of the P on a zy plane and an x-axis. Since the first arrival angle $\psi_1$ and the second arrival angle $\psi_2$ are located on different planes, the position p of the client in a three-dimensional space may be determined according to two angles of different planes. The above method may further extend the arrival angle from 2D to 3D.

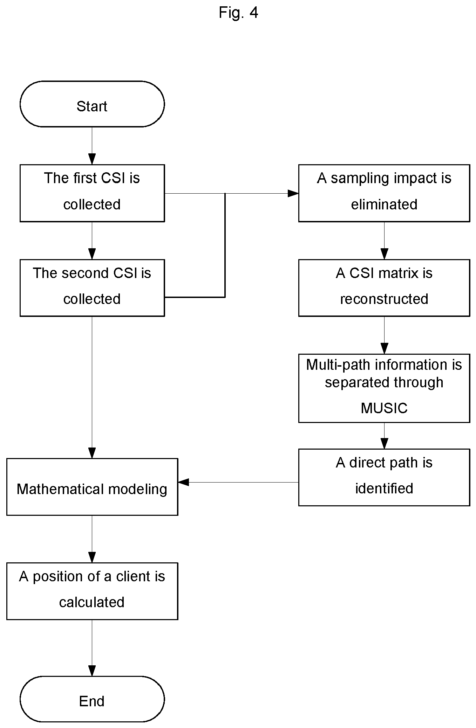

On the basis of including the above S1041 to S1043, the above S1042 is refined. The step includes: the second arrival angle is acquired by sequentially using the first acquisition step, the second acquisition step, and the processing step, where in the above first acquisition step or the above second acquisition step, the receiving antennas of the above AP are a third receiving antenna and a fourth receiving antenna, a straight line at which the above third receiving antenna and the above fourth receiving antenna are located is non-collinear with a straight line at which the above first receiving antenna and the above second receiving antenna are located. In the above method, the second arrival angle may be acquired by two methods. For the first method, when an antenna spacing between the third receiving antenna and the fourth receiving antenna does not meet a requirement that a spacing is less than half of the signal wavelength, third CSI in a communication link may be acquired by using the first acquisition step, then the process step is used to respectively process the above third SCI and second SCI, so as to obtain a third phase difference. Finally, the second arrival angle is determined according to the second phase difference and the third phase difference. For the second method, when the antenna spacing between the third receiving antenna and the fourth receiving antenna meets the requirement that the spacing is less than half of the signal wavelength, the third CSI in the communication link may be acquired by using the second acquisition step, then the process step is used to respectively process the above third SCI and first SCI, so as to obtain the third phase difference. Finally, the second arrival angle is determined according to the first phase difference and the third phase difference. In the above step, the position of the client may be rapidly determined by means of only adding an antenna or moving the antenna. As shown in Fig. 4, the method for determining the position of the client is first to collect CSI meeting the distance condition or CSI not meeting the distance condition, then perform sampling impact elimination, matrix reconstruction, multi-path information separation, and direction path identification on the two pieces of the CSI, and finally determine the position information of the client according to the antenna spacing and the direction path information.

An embodiment of the present disclosure further provides an apparatus for determining a position of a client. It is to be noted that the apparatus for determining the position of the client of this embodiment of the present disclosure may be configured to execute the method for determining the position of the client provided in the embodiments of the present disclosure. The client position determination apparatus provided in this embodiment of the present disclosure is introduced below.

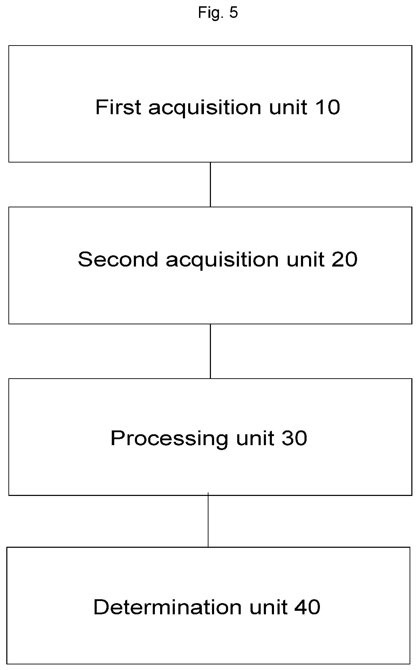

Fig. 5 is a schematic diagram of an apparatus for determining a position of a client according to an embodiment of the present disclosure. As shown in Fig. 5, the apparatus includes a first acquisition unit, a second acquisition unit, a processing unit, and a determination unit.

The first acquisition unit 10 is configured to perform a first acquisition step: at least one piece of first CSI is acquired from a first communication link for an AP to communicate with a client.

In the above apparatus, the CSI may represent a channel attribute of a communication link. The CSI describes a weakening factor on each transmission path, that is, a value of each element in a channel gain matrix, for example, information such as signal scattering, environment decline, distance attenuation, etc. The CSI may cause a communication system to adapt the current channel condition, and thus may ensure the high reliability and high-rate communication of an antenna system. The acquisition of the above CSI follows related provisions of Protocol 802.11, such that the CSI may be applied to a single user scenario or may also be applied to a multi-user scenario, and different CSI matrices may be obtained by executing the acquisition flow for a plurality of times. The number of rows of the CSI matrix is the number of antennas, the number of columns of the CSI matrix is the number of sub-carriers, and the CSI matrix indicates channel environment information of each antenna on each sub-carrier. The above apparatus may rapidly acquire a channel attribute of the first communication link.

The second acquisition unit 20 is configured to perform a second acquisition step: when a first receiving antenna and a second receiving antenna of the above AP meet a preset condition, at least one piece of second CSI is acquired from a second communication link for the above AP to communicate with the above client, where the above preset condition is that a spacing between the above first receiving antenna and the above second receiving antenna of the above AP is less than half of a signal wavelength, or after the above transmitting antenna and/or the above receiving antenna is moved, the spacing between the above receiving antennas of the above AP is less than half of the signal wavelength.

In the above apparatus, in an array antenna, in order to prevent a grating lobe, that is, prevent a radiation beam similar to a main beam, the antenna spacing needs to be limited as half of a wavelength. However, in practical application, the antenna spacings of most of the APs cannot meet the requirement. When the second CSI is acquired, there may be two modes. The first mode is to acquire CSI of an antenna pair that originally meets the preset condition; and the second mode may be that, by means of moving an antenna, the antenna that does not meet the preset condition originally meets a distance requirement. The above apparatus may rapidly acquire a channel attribute of the first communication link.

The processing unit 30 is configured to perform a processing step: the above first CSI is processed to obtain a first phase difference, and the above second CSI is processed to obtain a second phase difference, where the above first phase difference is a phase difference of a direct path from the above client to the first receiving antenna, and the above second phase difference is a phase difference of a direct path from the above client to the above second receiving antenna.

In the above apparatus, error influence during sampling may be eliminated by respectively processing the first CSI and the second CSI, then the plurality of pieces of path information from the client to the AP are separated, then direct path information from the client to the AP is determined, and finally, the phase difference of the direct path information may be determined. Since in practical application, there are a plurality of paths from the client to the AP, including a reflection path and the direct path, an arrival angle and the phase difference may only be determined by determining the direct path information. Therefore, the above apparatus can rapidly determine the phase difference of the direct path.

The determination unit 40 is configured to perform a determination step: a position of the above client is determined according to the above first phase difference and the above second phase difference.

In the above apparatus, since in methods in the related art, when an antenna spacing of a wireless client does not meet the condition, there are a plurality of solutions for the calculated client position, and it is impossible to determine which solution is the true solution, such that the phase differences of the direct paths identified by two groups of antennas may be calculated by using a mathematical modeling method different from the related art, and then the position of the client may be obtained. The above apparatus may lift a distance limitation to the antenna spacing of the AP.

In the embodiments of the present disclosure, the method for determining the position of the client includes the first acquisition step, the second acquisition step, the processing step, and the determination step. The first acquisition step and the second acquisition step respectively acquire the CSI of an antenna combination in which the antenna spacing is not less than half of the signal wavelength, as well as the CSI of an antenna combination in which the antenna spacing is less than half of the signal wavelength. The processing step and the determination step process the two groups of the CSI obtained by a method which is distinguished from traditional mathematical modeling method, so as to determine the position information of the client. Therefore, the technical effect of extending an original method for estimating an arrival angle of a direct path from a client to an AP from a linear antenna array meeting the spacing condition to any non-linear antenna array not meeting the isolation condition is achieved, thereby solving the technical problem of limiting the AP antenna spacing as half of the signal wavelength.

On the basis of including the above first acquisition unit, second acquisition unit, processing unit, and determination unit, the above processing unit is refined, and includes: a first processing module, configured to preprocess the first CSI by using a preprocessing method to obtain a first matrix. In the above apparatus, the error influence and the effect of phase jumps during sampling may be eliminated by preprocessing the first CSI. A second processing module is configured to process the first matrix by using a signal classification algorithm to obtain a plurality of pieces of first path information, where the first path information is path information of the first communication link. In the above apparatus, the signal classification algorithm in the above step may use a MUSIC algorithm. The MUSIC algorithm, which was proposed by Schmidt et al. in 1979, is a method based on decomposition of matrix eigenspace. Geometrically, an observation space for signal processing may be decomposed into two orthogonal signal subspaces and a noise subspace. The signal subspace is composed of feature vectors corresponding to signals in a data covariance matrix received by an array; and the noise subspace is composed of feature vectors corresponding to all minimum feature values (noise variance) in the covariance matrix. The MUSIC algorithm constructs a spatial spectral function by using orthogonality of the signal subspace and the noise subspace, and estimates parameters for the signals through spectral peak search. The path information of the plurality of first communication links may be accurately separated through the MUSIC. A third processing module is configured to cluster the plurality of pieces of first path information by using a clustering algorithm, so as to obtain the first phase difference. In the above apparatus, the clustering algorithm may be a clustering algorithm such as moving average clustering, hierarchical clustering, mean shift clustering, gaussian mixture model clustering, etc. The direct path information may be further accurately clustered and identified through the above clustering algorithm, thereby determining the first phase difference.

On the basis of including the above first processing module, second processing module, and third processing module, the above first processing module is refined, and includes: a first processing sub-module, configured to process the first CSI by using a method for eliminating a sampling error, so as to obtain first processing information. The above method for eliminating a sampling error includes a phase unwrapping technology, STO elimination, SFO elimination, etc. Phase unwrapping is the technology that recovers, from a measured wrapping phase ($-\pi$ to $\pi$ or 0 to $2\pi$), an absolute phase (i.e., elimination of $2\pi$ ambiguity) that can directly reflect a physical property of interest. Phase unwrapping may use a Goldstein branch-cut algorithm, a path tracking algorithm for quality guidance, an unweighted least squares method, a weighted multigrid method, an LP minimum norm method, and a minimum cost flow method. Sampling clock offset arises from the fact that clocks at a sending end and a receiving end are not synchronized, resulting in an inconsistency between sampling clocks of a digital-to-analog converter in the sending end and an analog-to-digital converter in the receiving end. The presence of the STO adds a time offset to a flight time of each propagation path, that is, a phase offset generated by the STO is additionally added to an original phase offset between sub-carriers in addition to a phase offset generated by the flight time, such that the flight time estimated by the algorithm includes the STO. Since the clocks of the sending end and the receiving end are not synchronized, a sampling frequency offset is also caused, causing noise to be added on the phase offset generated by the STO between the sub-carriers, leading to errors in the flight time of the same propagation path among a plurality of estimations. The STO elimination and SFO elimination methods may use various fitting methods, for example, joint solution is performed on data of a plurality of pieces of CSI by using a linear fitting method, a least squares method, a multiple regression method, etc., and the above apparatus may further eliminate the sampling error. A second processing sub-module is configured to process a matrix constituted by the first processing information, so as to obtain the first matrix, where the rank of the first matrix is greater than the number of paths of the first communication link. In the above apparatus, the matrix constituted by the above first processing information is reconstructed, such that a new matrix having a size different from the size of an original matrix may be formed. The reconstruction of the CSI matrix is mainly intended to reconstruct a matrix of which rank is greater than the number of multipaths from the limited number of the sub-carriers in the CSI. The specific matrix reconstruction mode may use a reconstruction mode such as forward space sliding, backward space sliding, conjugate sliding, etc. With respect to a sliding step length, the number of antennas, and the number of sub-array sub-carriers, those skilled in the art may make their own choices. The above reconstruction on the CSI matrix may meet a requirement of further clustering.

On the basis of including the above first acquisition unit, second acquisition unit, processing unit, and determination unit, the above processing unit is refined, and specifically includes: a fourth processing module, configured to preprocess the second CSI by using a preprocessing method to obtain a second matrix. In the above apparatus, the error influence and the effect of phase jumps during sampling may be eliminated by preprocessing the second CSI. A fifth processing module is configured to process the second matrix by using a signal classification algorithm to obtain a plurality of pieces of second path information, where the second path information is path information of the second communication link. In the above apparatus, the signal classification algorithm in the above step may use a MUSIC algorithm. The MUSIC algorithm, which was proposed by Schmidt et al. in 1979, is a method based on decomposition of matrix eigenspace. Geometrically, an observation space for signal processing may be decomposed into two orthogonal signal subspaces and a noise subspace. The signal subspace is composed of feature vectors corresponding to signals in a data covariance matrix received by an array; and the noise subspace is composed of feature vectors corresponding to all minimum feature values (noise variance) in the covariance matrix. The MUSIC algorithm constructs a spatial spectral function by using orthogonality of the signal subspace and the noise subspace, and estimates parameters for the signals through spectral peak search. The path information of the plurality of second communication links may be accurately separated through the MUSIC. A sixth processing module is configured to cluster the plurality of pieces of second path information by using a clustering algorithm, so as to obtain the second phase difference. In the above apparatus, the clustering algorithm may be a clustering algorithm such as moving average clustering, hierarchical clustering, mean shift clustering, gaussian mixture model clustering, etc. The direct path information may be further accurately clustered and identified through the above clustering algorithm, thereby determining the second phase difference.

On the basis of including the above fourth processing module, fifth processing module, and sixth processing module, the above fourth processing module is refined, and specifically includes: a third processing sub-module, configured to process the second CSI by using a method for eliminating a sampling error, so as to obtain second processing information. The above method for eliminating a sampling error includes a phase unwrapping technology, STO elimination, SFO elimination, etc. Phase unwrapping is the technology that recovers, from a measured wrapping phase (-π to π or 0 to 2π), an absolute phase (i.e., elimination of 2π ambiguity) that can directly reflect a physical property of interest. Phase unwrapping may use a Goldstein branch-cut algorithm, a path tracking algorithm for quality guidance, an unweighted least squares method, a weighted multigrid method, an LP minimum norm method, and a minimum cost flow method. Sampling clock offset arises from the fact that clocks at a sending end and a receiving end are not synchronized, resulting in an inconsistency between sampling clocks of a digital-to-analog converter in the sending end and an analog-to-digital converter in the receiving end. The presence of the STO adds a time offset to a flight time of each propagation path, that is, a phase offset generated by the STO is additionally added to an original phase offset between sub-carriers in addition to a phase offset generated by the flight time, such that the flight time estimated by the algorithm includes the STO. Since the clocks of the sending end and the receiving end are not synchronized, a sampling frequency offset is also caused, causing noise to be added on the phase offset generated by the STO between the sub-carriers, leading to errors in the flight time of the same propagation path among a plurality of estimations. The STO elimination and SFO elimination methods may use various fitting methods, for example, joint solution is performed on data of a plurality of pieces of CSI by using a linear fitting method, a least squares method, a multiple regression method, etc., and the above apparatus may further eliminate the sampling error. A fourth processing sub-module is configured to process a matrix constituted by the second processing information, so as to obtain the second matrix, where the rank of the second matrix is greater than the number of paths of the second communication link. In the above apparatus, the matrix constituted by the above second processing information is reconstructed, such that a new matrix having a size different from an original matrix may be formed. The reconstruction of the CSI matrix is mainly intended to reconstruct a matrix of which rank is greater than the number of multipaths from the limited number of the sub-carriers in the CSI. The specific matrix reconstruction mode may use a reconstruction mode such as forward space sliding, backward space sliding, conjugate sliding, etc. With respect to a sliding step length, the number of antennas, and the number of sub-array sub-carriers, those skilled in the art may make their own choices. The above reconstruction on the CSI matrix may meet a requirement of further clustering.

On the basis of including the above first acquisition unit, second acquisition unit, processing unit, and determination unit, the above determination unit is refined, and specifically includes: a first determination module, configured to determine a first arrival angle according to a formula

$$\delta_1 - \delta_2 = -2\pi \times \Delta d \times \sin(\psi) \times \frac{f}{c}$$

, where the first arrival angle is an arrival angle of a direct path from the client to the AP. As shown in Fig. 2, $\delta_1$ is the first phase difference, $\delta_2$ is the second phase difference, $\Delta d$ is a distance between the first receiving antenna and the second receiving antenna, $\psi$ is the first arrival angle, f is a signal frequency, c is a light speed, d is a distance between the first receiving antenna and the second receiving antenna, and d' is a distance between a third receiving antenna and a fourth receiving antenna.

In the above apparatus, the arrival angle of the direct path from the client to the AP may be rapidly determined according to the formula. The arrival angle is an arrival angle on a 2D plane. An acquisition module is configured to acquire a second arrival angle, where the second arrival angle is an arrival angle of the direct path from the client to the AP, and is located in a plane different from the first arrival angle. In the above apparatus, the position of the client may be rapidly determined by means of only adding an antenna or moving the antenna. The second arrival angle may be acquired in a manner in the related art, or may also be acquired by using a manner same as the first arrival angle. A second determination module is configured to determine the position of the above client according to an intersection line of a first plane and a second plane, where the above first plane is a plane that is formed by the above first arrival angle and a receiving antenna of the above first arrival angle, and the above second plane is a plane that is formed by the above first arrival angle and a receiving antenna of the above second arrival angle. As shown in Fig. 3, in an o-xyz three-dimensional coordinate system, t1 and t2 respectively represent position vectors of different antennas. $\phi$ represents an included angle between P and a z-axis, and θ represents an included angle between a projection of the P on a zy plane and an x-axis. Since the first arrival angle $\psi_1$ and the second arrival angle $\psi_2$ are located on different planes, the position p of the client in a three-dimensional space may be determined according to two angles of different planes. The above method may further extend the arrival angle from 2D to 3D.

On the basis of including the above first determination module, acquisition module, and second determination module, the above acquisition module is refined, and specifically includes: an acquisition sub-module, configured to acquire the second arrival angle by sequentially using the first acquisition step, the second acquisition step, and the processing step, where in the above first acquisition step or the above second acquisition step, the receiving antennas of the above AP are a third receiving antenna and a fourth receiving antenna, a straight line at which the above third receiving antenna and the above fourth receiving antenna are located is non-collinear with a straight line at which the above first receiving antenna and the above second receiving antenna are located. In the above apparatus, the second arrival angle may be acquired by two methods. For the first method, when an antenna spacing between the third receiving antenna and the fourth receiving antenna does not meet a requirement that a spacing is less than half of the signal wavelength, third CSI in a communication link may be acquired by using the first acquisition step, then the process step is used to respectively process the above third SCI and second SCI, so as to obtain a third phase difference. Finally, the second arrival angle is determined according to the second phase difference and the third phase difference. For the second method, when the antenna spacing between the third receiving antenna and the fourth receiving antenna meets the requirement that the spacing is less than half of the signal wavelength, the third CSI in the communication link may be acquired by using the second acquisition step, then the process step is used to respectively process the above third SCI and first SCI, so as to obtain the third phase difference. Finally, the second arrival angle is determined according to the first phase difference and the third phase difference. The above apparatus may rapidly determine the position of the client by means of only adding an antenna or moving the antenna. As shown in Fig. 4, the method for determining the position of the client is first to collect CSI meeting the distance condition or CSI not meeting the distance condition, then perform sampling impact elimination, matrix reconstruction, multi-path information separation, and direction path identification on the two pieces of the CSI, and finally determine the position information of the client according to the antenna spacing and the direction path information.

The above client position determination apparatus includes a processor and a memory. The above first acquisition unit, second acquisition unit, processing unit, and determination unit, and the like are all stored in the memory as program units. The processor executes the program units stored in the memory to implement corresponding functions.

The processor includes a kernel, and the kernel invokes the corresponding program units from the memory. There may be one or more kernels arranged. A position of a client is determined by adjusting kernel parameters.

The memory may include a non-persistent memory in a computer-readable medium, a Random Access Memory (RAM) and/or a non-volatile memory, for example, a Read Only Memory (ROM) or a flash memory (flash RAM). The memory includes at least one memory chip.

An embodiment of the present disclosure provides a storage medium, having a program stored thereon. The program implements, when being executed by a processor, the above client position determination method.

An embodiment of the present disclosure provides a processor. The above processor is configured to operate a program. The above client position determination method is executed when the above program is operated.

An embodiment of the present disclosure provides a device. The device includes a processor, a memory, and a program stored on the memory and executable on the processor. The processor, when executing the program, implements at least the following steps.

At S101, namely, a first acquisition step: at least one piece of first CSI is acquired from a first communication link for an AP to communicate with a client.

At S102, namely, a second acquisition step: when a first receiving antenna and a second receiving antenna of the above AP meet a preset condition, at least one piece of second CSI is acquired from a second communication link for the above AP to communicate with the above client, where the above preset condition is that a spacing between the above first receiving antenna and the above second receiving antenna of the above AP is less than half of a signal wavelength, or after the above transmitting antenna and/or the above receiving antenna is moved, the spacing between the above receiving antennas of the above AP is less than half of the signal wavelength.

At S103, namely, a processing step: the above first CSI is processed to obtain a first phase difference, and the above second CSI is processed to obtain a second phase difference, where the above first phase difference is a phase difference of a direct path from the above client to the first receiving antenna, and the above second phase difference is a phase difference of a direct path from the above client to the above second receiving antenna.

At S104, namely, a determination step: a position of the above client is determined according to the above first phase difference and the above second phase difference.

As at least one alternative embodiment, processing the first CSI to obtain the first phase difference includes: the first CSI is preprocessed by using a preprocessing method to obtain a first matrix; the first matrix is processed by using a signal classification algorithm to obtain a plurality of pieces of first path information, where the first path information is path information of the first communication link; and the plurality of pieces of first path information are clustered by using a clustering algorithm, so as to obtain the first phase difference.

As at least one alternative embodiment, preprocessing the first CSI by using the preprocessing method to obtain the first matrix includes: the first CSI is processed by using a method for eliminating a sampling error, so as to obtain first processing information; and a matrix constituted by the first processing information is processed, so as to obtain the first matrix, where the rank of the first matrix is greater than the number of paths of the first communication link.

As at least one alternative embodiment, processing the second CSI to obtain the second phase difference includes: the second CSI is preprocessed by using a preprocessing method to obtain a second matrix; the second matrix is processed by using a signal classification algorithm to obtain a plurality of pieces of second path information, where the second path information is path information of the second communication link; and the plurality of pieces of second path information are clustered by using a clustering algorithm, so as to obtain the second phase difference.

As at least one alternative embodiment, preprocessing the second CSI by using the preprocessing method to obtain the second matrix includes: the second CSI is processed by using a method for eliminating a sampling error, so as to obtain second processing information; and a matrix constituted by the second processing information is processed, so as to obtain the second matrix, where the rank of the second matrix is greater than the number of paths of the second communication link.

As at least one alternative embodiment, determining the position of the client according to the first phase difference and the second phase difference includes: a first arrival angle is determined according to a formula $\delta_1 - \delta_2 = -2\pi \times \Delta d \times \sin(\psi) \times \dfrac{f}{c}$, where the first arrival angle is an arrival angle of a direct path from the client to the AP, $\delta_1$ is the first phase difference, $\delta_2$ is the second phase difference, $\Delta d$ is a spacing between the first receiving antenna and the second receiving antenna, $\psi$ is the first arrival angle, f is a signal frequency, and c is a light speed; a second arrival angle is acquired, where the second arrival angle is an arrival angle of the direct path from the client to the AP, and is located in a plane different from the first arrival angle; and the position of the client is determined according to an intersection line of a first plane and a second plane, where the first plane is a plane that is formed by the first arrival angle and a receiving antenna of the first arrival angle, and the second plane is a plane that is formed by the first arrival angle and a receiving antenna of the second arrival angle.

As at least one alternative embodiment, acquiring the second arrival angle includes: the second arrival angle is acquired by sequentially using the first acquisition step, the second acquisition step, and the processing step, where in the first acquisition step or the second acquisition step, the receiving antennas of the AP are a third receiving antenna and a fourth receiving antenna, a straight line at which the third receiving antenna and the fourth receiving antenna are located is non-collinear with a straight line at which the first receiving antenna and the second receiving antenna are located.

The device herein may be a server, a PC, a PAD, a mobile phone, or the like.

The present disclosure further provides a computer program product. When being executed on a data processing device, the computer program product is adapted to execute a program initialized with at least the following method steps.

At S101, namely, a first acquisition step: at least one piece of first CSI is acquired from a first communication link for an AP to communicate with a client.

At S102, namely, a second acquisition step: when a first receiving antenna and a second receiving antenna of the above AP meet a preset condition, at least one piece of second CSI is acquired from a second communication link for the above AP to communicate with the above client, where the above preset condition is that a spacing between the above first receiving antenna and the above second receiving antenna of the above AP is less than half of a signal wavelength, or after the above transmitting antenna and/or the above receiving antenna is moved, the spacing between the above receiving antennas of the above AP is less than half of the signal wavelength.

At S103, namely, a processing step: the above first CSI is processed to obtain a first phase difference, and the above second CSI is processed to obtain a second phase difference, where the above first phase difference is a phase difference of a direct path from the above client to the first receiving antenna, and the above second phase difference is a phase difference of a direct path from the above client to the above second receiving antenna.

At S104, namely, a determination step: a position of the above client is determined according to the above first phase difference and the above second phase difference. In the above embodiments of the present disclosure, the description of the embodiments has its own focus. For parts that are not described in detail in a certain embodiment, reference may be made to related descriptions of other embodiments.

As at least one alternative embodiment, processing the first CSI to obtain the first phase difference includes: the first CSI is preprocessed by using a preprocessing method to obtain a first matrix; the first matrix is processed by using a signal classification algorithm to obtain a plurality of pieces of first path information, where the first path information is path information of the first communication link; and the plurality of pieces of first path information are clustered by using a clustering algorithm, so as to obtain the first phase difference.

As at least one alternative embodiment, preprocessing the first CSI by using the preprocessing method to obtain the first matrix includes: the first CSI is processed by using a method for eliminating a sampling error, so as to obtain first processing information; and a matrix constituted by the first processing information is processed, so as to obtain the first matrix, where the rank of the first matrix is greater than the number of paths of the first communication link.

As at least one alternative embodiment, processing the second CSI to obtain the second phase difference includes: the second CSI is preprocessed by using a preprocessing method to obtain a second matrix; the second matrix is processed by using a signal classification algorithm to obtain a plurality of pieces of second path information, where the second path information is path information of the second communication link; and the plurality of pieces of second path information are clustered by using a clustering algorithm, so as to obtain the second phase difference.

As at least one alternative embodiment, preprocessing the second CSI by using the preprocessing method to obtain the second matrix includes: the second CSI is processed by using a method for eliminating a sampling error, so as to obtain second processing information; and a matrix constituted by the second processing information is processed, so as to obtain the second matrix, where the rank of the second matrix is greater than the number of paths of the second communication link.

As at least one alternative embodiment, determining the position of the client according to the first phase difference and the second phase difference includes: a first arrival angle is determined according to a formula $\delta_1 - \delta_2 = -2\pi \times \Delta d \times \sin(\psi) \times \dfrac{f}{c}$, where the first arrival angle is an arrival angle of a direct path from the client to the AP, $\delta_1$ is the first phase difference, $\delta_2$ is the second phase difference, $\Delta d$ is a spacing between the first receiving antenna and the second receiving antenna, $\psi$ is the first arrival angle, f is a signal frequency, and c is a light speed; a second arrival angle is acquired, where the second arrival angle is an arrival angle of the direct path from the client to the AP, and is located in a plane different from the first arrival angle; and the position of the client is determined according to an intersection line of a first plane and a second plane, where the first plane is a plane that is formed by the first arrival angle and a receiving antenna of the first arrival angle, and the second plane is a plane that is formed by the first arrival angle and a receiving antenna of the second arrival angle.

As at least one alternative embodiment, acquiring the second arrival angle includes: the second arrival angle is acquired by sequentially using the first acquisition step, the second acquisition step, and the processing step, where in the first acquisition step or the second acquisition step, the receiving antennas of the AP are a third receiving antenna and a fourth receiving antenna, a straight line at which the third receiving antenna and the fourth receiving antenna are located is non-collinear with a straight line at which the first receiving antenna and the second receiving antenna are located.

In the several embodiments provided in the present disclosure, it should be understood that, the disclosed technical content can be implemented in other ways. The apparatus embodiments described above are merely illustrative. For example, the division of the units may be a logical function division, and there may be other divisions in actual implementation. For example, a plurality of units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms.

The units described as separate components may or may not be physically separated. The components displayed as units may or may not be physical units, that is, the components may be located in one place, or may be distributed on the plurality of units. Part or all of the units may be selected according to actual requirements to achieve the purposes of the solutions of this embodiment.

In addition, the functional units in the various embodiments of the present disclosure may be integrated into one processing unit, or each unit may exist alone physically, or two or more than two units may be integrated into one unit. The above integrated unit can be implemented in the form of hardware, or can be implemented in the form of a software functional unit.

If the integrated unit is implemented in the form of the software functional unit and sold or used as an independent product, it can be stored in the computer readable storage medium. Based on this understanding, the technical solutions of the present disclosure essentially or the parts that contribute to the related art, or all or part of the technical solutions can be embodied in the form of a software product. The computer software product is stored in a storage medium, including a plurality of instructions for causing a computer device (which may be a personal computer, a server, or a network device, and the like) to execute all or part of the steps of the method described in the various embodiments of the present disclosure. The foregoing storage medium includes a USB flash disk, a Read-Only Memory (ROM), a Random Access Memory (RAM), and various media that can store program codes, such as a mobile hard disk, a magnetic disk, or an optical disk.

It may be seen from the above description that, in the above embodiments of the present disclosure, the following technical effects are realized.

1) The client position determination method of the present disclosure includes the first acquisition step, the second acquisition step, the processing step, and the determination step. The first acquisition step may acquire the CSI of an antenna combination in which the antenna spacing is not less than half of the signal wavelength, or may also acquire the CSI of an antenna combination in which the antenna spacing is less than half of the signal wavelength. The second acquisition step may acquire the CSI of the antenna combination in which the antenna spacing is less than half of the signal wavelength. The processing step and the determination step process the two groups of the CSI obtained by distinguishing from traditional mathematical modeling method, so as to determine the position information of the client. Therefore, the technical effect of extending an original method for estimating an arrival angle of a direct path from a client to an AP from a linear antenna array meeting the spacing condition to any non-linear antenna array not meeting the isolation condition is achieved, thereby solving the technical problem of limiting the AP antenna spacing as half of the signal wavelength.

2) The client position determination apparatus of the present disclosure includes the first acquisition unit, the second acquisition unit, the processing unit, and the determination unit. The first acquisition step may acquire the CSI of an antenna combination in which the antenna spacing is not less than half of the signal wavelength, or may also acquire the CSI of an antenna combination in which the antenna spacing is less than half of the signal wavelength. The second acquisition step may acquire the CSI of the antenna combination in which the antenna spacing is less than half of the signal wavelength. The processing unit and the determination unit process the two groups of the CSI obtained by distinguishing from traditional mathematical modeling method, so as to determine the position information of the client. Therefore, the technical effect of extending an original method for estimating an arrival angle of a direct path from a client to an AP from a linear antenna array meeting the spacing condition to any non-linear antenna array not meeting the isolation condition is achieved, thereby solving the technical problem of limiting the AP antenna spacing as half of the signal wavelength.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

**Claims**

1. A method for determining a position of a client, comprising:

   a first acquisition step: acquiring at least one piece of first Channel State Information (CSI) from a first communication link for an Access Point (AP) to communicate with the client;
   a second acquisition step: when a first receiving antenna and a second receiving antenna of the AP meet a preset condition, acquiring at least one piece of second CSI from a second communication link for the AP to communicate with the client, wherein the preset condition is that a spacing between the first receiving antenna and the second receiving antenna of the AP is less than half of a signal wavelength, or after moving at least one receiving antenna, the spacing between the first receiving antenna and the second receiving antenna of the AP is less than half of the signal wavelength;
   a processing step: processing the first CSI to obtain a first phase difference, and processing the second CSI to obtain a second phase difference, wherein the first phase difference is a phase difference of a direct path from the client to the first receiving antenna, and the second phase difference is a phase difference of a direct path from the client to the second receiving antenna; and
   a determination step: determining a position of the client according to the first phase difference and the second phase difference.

2. The method as claimed in claim 1, wherein processing the first CSI to obtain the first phase difference comprises:

   preprocessing the first CSI by using a preprocessing method to obtain a first matrix;
   processing the first matrix by using a signal classification algorithm to obtain a plurality of pieces of first path information, wherein the first path information is path information of the first communication link; and
   clustering the plurality of pieces of first path information by using a clustering algorithm, so as to obtain the first phase difference.

3. The method as claimed in claim 2, wherein preprocessing the first CSI by using the preprocessing method to obtain the first matrix comprises:

processing the first CSI by using a method for eliminating a sampling error, so as to obtain first processing information; and
processing a matrix constituted by the first processing information, so as to obtain the first matrix, wherein a rank of the first matrix is greater than the number of paths of the first communication link.

4. The method as claimed in claim 1, wherein processing the second CSI to obtain the second phase difference comprises:

preprocessing the second CSI by using a preprocessing method to obtain a second matrix;
processing the second matrix by using a signal classification algorithm to obtain a plurality of pieces of second path information, wherein the second path information is path information of the second communication link; and
clustering the plurality of pieces of second path information by using a clustering algorithm, so as to obtain the second phase difference.

5. The method as claimed in claim 4, wherein preprocessing the second CSI by using the preprocessing method to obtain the second matrix comprises:

processing the second CSI by using a method for eliminating a sampling error, so as to obtain second processing information; and
processing a matrix constituted by the second processing information, so as to obtain the second matrix, wherein a rank of the second matrix is greater than the number of paths of the second communication link.

6. The method as claimed in claim 1, wherein determining the position of the client according to the first phase difference and the second phase difference comprises:

determining a first arrival angle according to a formula

$$\delta_1 - \delta_2 = -2\pi \times \Delta d \times \sin(\psi) \times \frac{f}{c},$$

wherein the first arrival angle is an arrival angle of a direct path from the client to the AP, $\delta_1$ is the first phase difference, $\delta_2$ is the second phase difference, $\Delta d$ is the spacing between the first receiving antenna and the second receiving

antenna, $\psi$ is the first arrival angle, f is a signal frequency, and c is a light speed;
acquiring a second arrival angle, wherein the second arrival angle is an arrival angle of the direct path from the client to the AP, and is located in a plane different from a plane at which the first arrival angle locates; and
determining the position of the client according to an intersection line of a first plane and a second plane, wherein the first plane is a plane that is formed by the first arrival angle and a receiving antenna of the first arrival angle, and the second plane is a plane that is formed by the first arrival angle and a receiving antenna of the second arrival angle.

7. The method as claimed in claim 6, wherein acquiring the second arrival angle comprises:
acquiring the second arrival angle by sequentially using the first acquisition step, the second acquisition step, and the processing step, wherein in the first acquisition step or the second acquisition step, receiving antennas of the AP are a third receiving antenna and a fourth receiving antenna, a straight line at which the third receiving antenna and the fourth receiving antenna are located is non-collinear with a straight line at which the first receiving antenna and the second receiving antenna are located.

8. An apparatus for determining a position of a client, comprising:

a first acquisition unit, configured to perform a first acquisition step: acquiring at least one piece of first Channel State Information (CSI) from a first communication link for an Access Point (AP) to communicate with the client;
a second acquisition unit, configured to perform a second acquisition step: when a first receiving antenna and a second receiving antenna of the AP meet a preset condition, acquiring at least one piece of second CSI from a second communication link for the AP to communicate with the client, wherein the preset condition is that a spacing between the first receiving antenna and the second receiving antenna of the AP is less than half of a signal wavelength, or after moving at least one receiving antenna, the spacing between the first receiving antenna and the second receiving antenna of the AP is less than half of the signal wavelength;
a processing unit, configured to perform a processing step: processing the first CSI to obtain a first phase difference, and processing the second CSI to obtain a second phase difference, wherein the first phase difference is a phase difference of a direct path from the client to the first receiving antenna, and the second phase difference is a phase difference of a direct path from the client to the second receiving antenna; and

a determination unit, configured to perform a determination step: determining a position of the client according to the first phase difference and the second phase difference.

9. A computer-readable storage medium, comprising a stored program, wherein the program executes the method as claimed in any one of claims 1 to 7.

10. A processor, configured to operate a program, wherein the method as claimed in any one of claims 1 to 7 is executed when the program is operated.

Fig. 1

A first acquisition step: at least one piece of first CSI is acquired from a first communication link for an AP to communicate with a client — S101

A second acquisition step: when a first receiving antenna and a second receiving antenna of the above AP meet a preset condition, at least one piece of second CSI is acquired from a second communication link for the above AP to communicate with the above client, where the preset condition is that a spacing between the first receiving antenna and the second receiving antenna of the AP is less than half of a signal wavelength, or after the transmitting antenna and/or the receiving antenna is moved, the spacing between the receiving antennas of the AP is less than half of the signal wavelength — S102

A processing step: the first CSI is processed to obtain a first phase difference, and the second CSI is processed to obtain a second phase difference, where the first phase difference is a phase difference of a direct path from the client to the first receiving antenna, and the second phase difference is a phase difference of a direct path from the client to the second receiving antenna — S103

A determination step: a position of the client is determined according to the first phase difference and the second phase difference — S104

Fig. 2

Fig. 3

Fig. 4

```
                    ┌─────────────┐
                   (    Start      )
                    └──────┬──────┘
                           │
                           ▼
              ┌────────────────────┐          ┌────────────────────┐
              │  The first CSI is  │─────────▶│ A sampling impact is│
              │     collected      │          │     eliminated      │
              └─────────┬──────────┘          └──────────┬─────────┘
                        │                                │
                        ▼                                ▼
              ┌────────────────────┐          ┌────────────────────┐
              │ The second CSI is  │          │   A CSI matrix is   │
              │     collected      │          │    reconstructed    │
              └─────────┬──────────┘          └──────────┬─────────┘
                        │                                │
                        │                                ▼
                        │                     ┌────────────────────┐
                        │                     │Multi-path information is│
                        │                     │  separated through  │
                        │                     │       MUSIC         │
                        │                     └──────────┬─────────┘
                        │                                │
                        ▼                                ▼
              ┌────────────────────┐          ┌────────────────────┐
              │Mathematical modeling│◀────────│  A direct path is   │
              │                    │          │     identified      │
              └─────────┬──────────┘          └────────────────────┘
                        │
                        ▼
              ┌────────────────────┐
              │A position of a client is│
              │     calculated     │
              └─────────┬──────────┘
                        │
                        ▼
                  ┌─────────────┐
                 (     End       )
                  └─────────────┘
```

Fig. 5

First acquisition unit 10

Second acquisition unit 20

Processing unit 30

Determination unit 40

## INTERNATIONAL SEARCH REPORT

International application No.

**PCT/CN2022/143626**

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, DWPI, ENTXT, ENTXTC: 接入点, 位置, 定位, 信道状态信息, 到达角, 波长, 半, 二分之一, 间隔, 间距, 距离, 天线, 相位, 相位差, 直接路径, 直射路径, AP, position, location, CSI, AOA, wavelength, half, spacing, distance?, antenna?, phase, phase difference, direct path

### C. DOCUMENTS CONSIDERED TO BE RELEVANT

| Category* | Citation of document, with indication, where appropriate, of the relevant passages | Relevant to claim No. |
|---|---|---|
| A | US 2021302528 A1 (WITAGG INC.) 30 September 2021 (2021-09-30) description, paragraphs [0026]-[0102], and figures 1-11 | 1-10 |
| A | CN 110857973 A (HUAWEI TECHNOLOGIES CO., LTD.) 03 March 2020 (2020-03-03) entire document | 1-10 |
| A | CN 111405657 A (HARBIN ENGINEERING UNIVERSITY) 10 July 2020 (2020-07-10) entire document | 1-10 |
| A | CN 111505565 A (NANJING UNIVERSITY OF POSTS AND TELECOMMUNICATIONS) 07 August 2020 (2020-08-07) entire document | 1-10 |
| A | CN 112073895 A (CHONGQING UNIVERSITY OF POSTS AND TELECOMMUNICATIONS) 11 December 2020 (2020-12-11) entire document | 1-10 |
| A | CN 112887899 A (TSINGHUA UNIVERSITY) 01 June 2021 (2021-06-01) entire document | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 September 2023** | **13 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/143626** |

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 10794983 B1 (CISCO TECHNOLOGY, INC.) 06 October 2020 (2020-10-06) entire document | 1-10 |

**INTERNATIONAL SEARCH REPORT**
Information on patent family members

International application No.

**PCT/CN2022/143626**

| Patent document cited in search report | | | Publication date (day/month/year) | Patent family member(s) | | | Publication date (day/month/year) |
|---|---|---|---|---|---|---|---|
| US | 2021302528 | A1 | 30 September 2021 | None | | | |
| CN | 110857973 | A | 03 March 2020 | US | 2020068523 | A1 | 27 February 2020 |
| | | | | US | 10917870 | B2 | 09 February 2021 |
| | | | | EP | 3614165 | A1 | 26 February 2020 |
| | | | | EP | 3614165 | B1 | 15 December 2021 |
| CN | 111405657 | A | 10 July 2020 | None | | | |
| CN | 111505565 | A | 07 August 2020 | None | | | |
| CN | 112073895 | A | 11 December 2020 | None | | | |
| CN | 112887899 | A | 01 June 2021 | None | | | |
| US | 10794983 | B1 | 06 October 2020 | None | | | |

Form PCT/ISA/210 (patent family annex) (July 2022)